# EUROPEAN PATENT SPECIFICATION

(11) **EP 1 322 934 B1**
(45) Date of publication and mention of the grant of the patent: **21.01.2009**
(21) Application number: 01972278.4
(22) Date of filing: 01.10.2001
(51) Int. Cl.: G01N 1/24, G01N 1/34, B01D 47/02

(54) **SAMPLER FOR COLLECTING PARTICLES FROM AIR**
GERÄT ZUR AKKUMULATION VON IN DER LUFT ENTHALTENEN PARTIKELN
ECHANTILLONNEUR POUR ACCUMULER DES PARTICULES CONTENUES DANS L'AIR

(30) Priority: 04.10.2000 GB 0024227
(43) Date of publication of application: 02.07.2003
(73) Proprietor: THE SECRETARY OF STATE FOR DEFENCE, Salisbury SP4 0JQ (GB)
(72) Inventor: SQUIRRELL, David, James DSTL, Salisbury Wiltshire SP4 0JQ (GB); SYMONDS, William, Hunter DSTL, Salisbury Wiltshire SP4 0JQ (GB); BIRD, Hilary, Anne DSTL, Salisbury Wiltshire SP4 0JQ (GB); BERRY, Martin, John DSTL, Salisbury Wiltshire SP4 0JQ (GB)
(74) Representative: Beckham, Robert William
(86) International application number: PCT/GB2001/004387
(87) International publication number: WO 2002/029380

(56) References cited:
- EP-A- 0 213 031
- EP-A- 0 668 095
- EP-A- 0 927 578
- US-A- 5 154 891

## Description

This invention relates to air samplers and particularly, but not exclusively, relates to air samplers for sampling ambient atmosphere, in order to detect and measure contamination that may be present.

Air samplers are known to the art. EP 0 927 578, in particular, discloses apparatus separating particle contaminants from gases, comprising a chamber having a gas flow inlet and outlet and a component for dividing gas flow there in which means are provided for introducing and recycling a liquid between the chamber and a collection tank. EP 0 668 095 discloses apparatus comprising a chamber having a gas-liquid interface and a sensor for sensing the presence of liquid within the chamber.

These prior art air apparatus do not, however, provide means enabling samples of the collection liquid to be obtained whilst the apparatus is in use.

The present invention generally seeks to provide an air sampler enabling the operator to collect samples during its use. In particular, the present invention aims to provide an air sampler enabling the collection of cumulative or sequential samples, from large volumes of air to small volumes of liquid (e.g. particles from 100 m³ of air to about 10 ml of liquid). Sequential samples may be taken automatically. These samples may be kept cool to preserve them for later analysis.

Accordingly, the present invention provides an air sampler comprising an airflow chamber having an air inlet and an air outlet, means for introducing liquid into air flowing through the airflow chamber so as to entrain any particles present in the airflow, means for collecting the liquid and any entrained particles therein and for depositing the liquid and entrained particles in a collection vessel and means for returning the liquid from the collection vessel to the airflow chamber, characterised by means for drawing a fraction of the liquid and any particles therein from the collection vessel to one or more sample bottles, a detector for detecting the presence of air bubbles in the liquid returning from the collection vessel and means operable to introduce fresh liquid into the airflow chamber when the detector detects said air bubbles.

In another aspect, the present invention also provides a method for sampling air, comprising introducing a liquid into air flowing through an airflow chamber so as to entrain particles present in the airflow, collecting the liquid and any entrained particles in a collection vessel and returning the liquid from the collection vessel to the airflow chamber, characterised by drawing off a fraction of the liquid from the collection vessel to one or more sample bottles and introducing fresh liquid into the airflow chamber when the presence of air bubbles in the liquid returning from the collection vessel is detected by a detector.

The drawing of the liquid to the sample bottles may be performed at pre-set times in accordance with a programmable timer.

An embodiment of the present invention will now be described by way of example only, with reference to the accompanying drawings in which
Figure 1 is a diagrammatic illustration of one embodiment of the air sampler; and
Figure 2 is an enlarged detail of part of Figure 1.

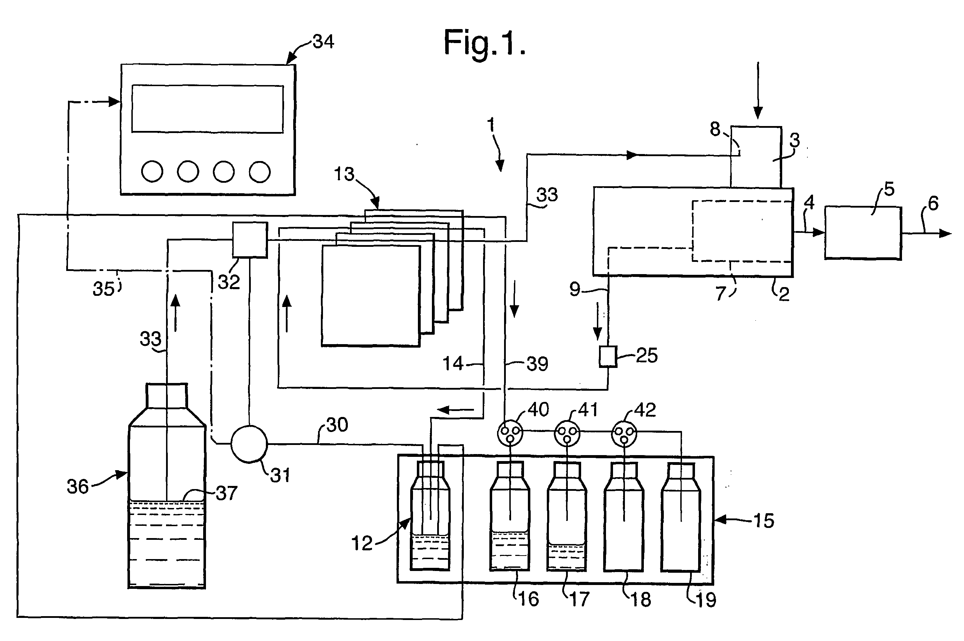

With reference to Figure 1, an air sampler 1 for use in analysing biological analytes comprises an airflow chamber 2 having an air inlet 3 and an air outlet 4. An air mover 5, conveniently an extraction fan, draws ambient air at 500 to 1000 l/min in through the inlet 3, and then through the chamber 2, to discharge it back to the atmosphere by way of outlet 6.

The airflow chamber 2 houses a cyclone air/liquid separator 7 through which the inflowing air is caused to pass.

Means comprising an injector 8 introduces liquid into air flowing through the air inlet 3. The cyclone separator 7 extracts this liquid and any entrained particles therein and discharges it from the airflow chamber 2, initially by way of a duct 9, where it is then conveyed to a collection vessel 12, by way of one channel of a single three channel peristaltic pump 13 and a duct 14. The collection vessel 12 is housed within a Peltier-cooled holder 15 to maintain the contents of the vessel within the 2°C to 8°C range which is desirable for maintaining the integrity of biological analytes such as bacteria or proteins. Analyses such as PCR (Polymerase Chain Reaction), culture or agar plates or immunoassays may be performed on the collected samples.

The holder 15 also houses sample bottles 16, 17, 18 and 19.

A large pore (e.g. 25 µm) filter unit 25 is fitted in the duct 9 to remove large particulates present in the collected air which are unsuitable for a particular assay, for example, diesel soot. The filter unit 25 will, however, allow soluble analytes or small particulate analytes, such as bacteria and viruses, to pass through.

The sampler 1 further comprises recirculation means for returning collected entraining liquid from the vessel 12 to the airflow chamber 2 where it is discharged to air flowing into the cyclone 7. These means comprise an extraction line 30, a bubble detector 31, a pinch valve 32, and a discharge line 33 which passes through another of the three channels of pump 13. The bubble detector 31 is connected to electronic circuitry, which includes, a programmable timer 34, by way of an electronic signal line 35. The circuitry incorporates a controlling microprocessor.

A reservoir 36 houses entrainment liquid 37, comprising deionised water containing 0.01 % of a nonionic detergent such as Tween®-20 and 10 mM HEPES (N-2-hydroxyethylpiperazine-N¹-2-ethane sulphonic acid) buffer, pH 7.5. Line 33 draws this liquid from the reservoir 36 by way of the pinch valve 32 and passes it via a needle-gauge stainless tube, which forms the injector 8, into the airflow inlet 3 at about 2.0 ml/min.

Aerosol particles entrained into the liquid stream exit from the airflow chamber 2 (via a standard Luer-fitting port) and through a pump 13 to be deposited in the collection vessel 12.

The collection fluid is re-circulated from the vessel 12 back into the airflow chamber 2 by way of line 30, bubble detector 31, pinch valve 32, pump 13 and line 33. This continues until the level of liquid within the vessel 12 falls to a point whereby air rather than liquid is drawn into line 30. When the entrained air reaches the bubble detector 31 an electronic signal is sent via line 35 to the microprocessor in the electronic circuitry which includes the programmable timer 34. The microprocessor then operates the pinch valve 32 so that, for a pre-set period of time, fresh collection fluid is drawn from the reservoir 36 and discharged into the airflow chamber 2, by way of line 33, pinch valve 32, pump 13, line 33 and injector 8.

After the set period, the pinch valve 32 is operated so that the system is restored to the re-circulation mode, which continues until the liquid level in collection vessel 12 falls again and air is again entrained.

A time delay is built into the system so as to allow fluid from the re-charged collection vessel 12 to reach the bubble detector 31.

In addition, a start-up routine is programmed into timer 34 to allow initial charging of the system.

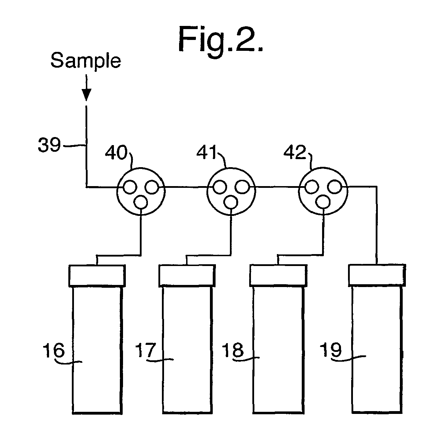

As mentioned above, pump 13 is a single three-channel pump. Two of the channels of the pump are used for pumping liquid into and out of the airflow chamber 2. The remaining channel is used to draw off small volumes of liquid for discharge to a selected one or more of the sample bottles 16, 17, 18, and 19 via line 39 and three-way valves 40, 41 and 42 (see Figure 2).

In this example, the flow rate of entraining liquid into the airflow chamber 2 and cyclone 7 is ca 2 ml/min, the sample for analysis may be drawn off at a much lower rate of ca. 50 µl/min using smaller bore tubing. This allows an integrated sample of aerosol particles to be collected for up to 8 h into a standard 25 ml "universal" bottle. In this embodiment there are four sample bottles (16 to 19) so monitoring the air for an 8 h working shift, or a full 24 h day, is possible without the need for an operator to be present. In addition, the programmable timer 34 allows the apparatus to be positioned and then activated automatically at set times up to one week in advance. For four samples, the three-way valves (40 to 42) are needed to direct the sample flow.

The collected samples are subsequently analysed in the conventional manner.

## Claims

1. An air sampler (1) comprising an air flow chamber (2) having an air inlet (3) and an air outlet (4), means (8,13,32,33) for introducing liquid into air flowing through the airflow chamber (2) so as to entrain any particles present in the airflow, means (9,13,14) for collecting the liquid and any entrained particles therein and for depositing the liquid and entrained particles in a collection vessel (12) and means (30,31,32) for returning the liquid from the collection vessel (12) to the airflow chamber (2), **characterised by** means (39,40) for drawing a fraction of the liquid and any particles therein from the collection vessel (12) to one or more sample bottles (16), a detector (31) for detecting the presence of air bubbles in the liquid returning from the collection vessel (12) and means (8,13,32,33) operable to introduce fresh liquid into the airflow chamber (2) when the detector (31) detects said air bubbles.

2. An air sampler according to Claim 1, comprising programmable timer means (34) for actuating operation of the means (39,40) for drawing the fraction of the liquid to the sample bottle or bottles (16) at pre-set times.

3. An air sampler according to Claim 2, comprising a microprocessor for controlling discharge of the fresh liquid from a reservoir (36) to the means (8,13,32,33) for introducing liquid into the air flow chamber (2).

4. An air sampler according to Claim 3, in which the microprocessor is responsive to an electronic signal from the detector (31).

5. An air sampler according to any preceding Claim, operable to draw the liquid from the collection vessel (12) to the sample bottle or bottles (16) at a flow rate of about 50 µl/min when the liquid is introduced into the airflow chamber (2) at a rate of about 2 ml/min.

6. An air sampler according to any preceding Claim, comprising a single three-channel pump (13) in which two channels are operable to pump the liquid to and from the airflow chamber (2) and the third channel is operable to draw off the fraction of the liquid to a selected sample bottle (16).

7. An air sampler according to any preceding Claim, operable to draw 500 to 1000 l/min through the air outlet (4).

8. An air sampler according to any preceding Claim, further comprising a Peltier-cooled holder (15) for housing the sample bottle or bottles (16) and maintaining their contents within about 2°C to about 8°C.

9. A method for sampling air, comprising introducing a liquid into air flowing through an airflow chamber (2) so as to entrain particles present in the airflow, collecting the liquid and any entrained particles in a collection vessel (12) and returning the liquid from the collection vessel to the air flow chamber (2), **characterised by** drawing off a fraction of the liquid from the collection vessel (12) to one or more sample bottles (16) and introducing fresh liquid into the airflow chamber (2) when the presence of air bubbles in the liquid returning from the collection vessel (12) is detected by a detector (31).

## Patentansprüche

1. Probennahmegerät für Luftproben, das aufweist:
eine Luftströmungskammer (2) mit einem Lufteinlass (3) und einem Luftauslass (4),
eine Einrichtung (8, 13, 32, 33) zur Einführung von Flüssigkeit in den durch die Luftströmungskammer (2) strömenden Luftstrom, um so irgendwelche im Luftstrom vorliegenden Partikel mitzunehmen,
eine Einrichtung (9, 13, 14) zum Sammeln der Flüssigkeit und irgendwelcher mitgenommener Partikel darin und zum Abscheiden der Flüssigkeit und mitgenommener Partikel in einem Sammelbehälter (12) sowie
eine Einrichtung (30, 31, 32) zum Rückführen der Flüssigkeit vom Sammelbehälter (12) zur Luftströmungskammer (2), **gekennzeichnet durch**
eine Einrichtung (39, 40) zum Abziehen eines Teils der Flüssigkeit und irgendwelcher Partikel darin aus dem Sammelbehälter (12) in eine oder mehrere Probenflaschen (16), einen Detektor (31) zum Erfassen des Vorliegens von Luftblasen in der vom Sammelbehälter (12) rückgeführten Flüssigkeit sowie eine Einrichtung (8, 13, 32, 33), die so betreibbar ist, dass frische Flüssigkeit in die Luftströmungskammer (2) eingeführt wird, wenn der Detektor (31) Luftblasen erfasst.

2. Probennahmegerät für Luftproben nach Anspruch 1, das eine programmierbare Zeitgebereinrichtung (34) zur Ansteuerung des Betriebs der Einrichtung (39, 40) zum Abziehen des Teils der Flüssigkeit in die Probenflasche oder Probenflaschen (16) zu vorgegebenen Zeiten aufweist.

3. Probennahmegerät für Luftproben nach Anspruch 2, das einen Mikroprozessor zur Steuerung der Ableitung der frischen Flüssigkeit aus einem Reservoir (36) in die Einrichtung (8, 13, 32, 33) zur Einführung von Flüssigkeit in die Luftströmungskammer (2) aufweist.

4. Probennahmegerät für Luftproben nach Anspruch 3, bei dem der Mikroprozessor auf ein elektrisches Signal vom Detektor (31) anspricht.

5. Probennahmegerät für Luftproben nach einem der vorhergehenden Ansprüche, der so betreibbar ist, dass die Flüssigkeit aus dem Sammelbehälter (12) mit einem Durchsatz von etwa 50 µl/min in die Probenflasche oder die Probenflaschen (16) abgezogen wird, wenn die Flüssigkeit mit einem Durchsatz von etwa 2 ml/min in die Luftströmungskammer (2) eingeführt wird.

6. Probennahmegerät für Luftproben nach einem der vorhergehenden Ansprüche, das eine einzige Dreikanalpumpe (13) aufweist, bei der zwei Kanäle so betreibbar sind, dass die Flüssigkeit zur und von der Luftströmungskammer (2) gepumpt wird, und der dritte Kanal so betreibbar ist, dass der Teil der Flüssigkeit zu einer ausgewählten Probenflasche (16) abgezogen wird.

7. Probennahmegerät für Luftproben nach einem der vorhergehenden Ansprüche, das so betreibbar ist, dass ein Durchsatz von 500 bis 1000 l/min durch den Luftauslass (4) abgezogen wird.

8. Probennahmegerät für Luftproben nach einem der vorhergehenden Ansprüche, das ferner einen Peltier-gekühlten Halter (15) zur Aufnahme der Probenflasche oder Probenflaschen (16) und zum Halten ihres Inhalts auf einer Temperatur im Bereich von etwa 2 °C bis etwa 8 °C aufweist.

9. Verfahren zur Probennahme von Luftproben, das umfasst:
Einführen einer Flüssigkeit in Luft, die durch eine Luftströmungskammer (2) strömt, in der Weise, dass in dem Luftstrom vorliegende Partikel mitgenommen werden,
Sammeln der Flüssigkeit und irgendwelcher mitgenommener Partikel in einem Sammelbehälter (12) und
Rückführen der Flüssigkeit aus dem Sammelbehälter zur Luftströmungskammer (2),
**gekennzeichnet durch**
Abziehen eines Teils der Flüssigkeit aus dem Sammelbehälter (12) in eine oder mehrere Probenflaschen (16) und Einführen von frischer Flüssigkeit in die Luftströmungskammer (2), wenn das Vorliegen von Luftblasen in der vom Sammelbehälter (12) rückgeführten Flüssigkeit **durch** einen Detektor (31) erfasst wird.

## Revendications

1. Echantillonneur d'air (1) comprenant une chambre d'écoulement d'air (2) ayant une entrée d'air (3) et une sortie d'air (4), des systèmes (8, 13, 32, 33) pour introduire un liquide dans l'air s'écoulant à travers la chambre d'écoulement d'air (2), de façon à entraîner toutes les particules présentes dans le flux d'air, des moyens (9, 13, 14) pour collecter le liquide et les particules entraînées à l'intérieur et pour déposer ledit liquide et lesdites particules entraînées dans un récipient de collecte (12) et des moyens (30, 31, 32) pour renvoyer le liquide depuis le récipient de collecte (12) vers la chambre d'écoulement d'air (2), **caractérisé par** des moyens (39, 40) destinés à entraîner une fraction du liquide et des particules qu'il contient, du récipient de collecte (12) vers une ou plusieurs bouteilles d'échantillon (16), un détecteur (31) pour détecter la présence de bulles d'air dans le liquide revenant du récipient de collecte (12) et des moyens (8, 13, 32, 33) pouvant être actionnés pour introduire du liquide frais dans la chambre d'écoulement d'air (2) quand le détecteur (31) détecte lesdites bulles d'air.

2. Echantillonneur d'air selon la revendication 1, comprenant un moyen d'une minuterie programmable (34) pour actionner le fonctionnement des moyens (39, 40) permettant d'entraîner une fraction du liquide vers la bouteille ou les bouteilles d'échantillon (16) à des moments préétablis.

3. Echantillonneur d'air selon la revendication 2, comprenant un microprocesseur pour contrôler la décharge du liquide frais depuis un réservoir (36) vers les moyens (8, 13, 32, 33) destinés à introduire du liquide dans la chambre d'écoulement d'air (2).

4. Echantillonneur d'air selon la revendication 3, dans lequel le microprocesseur est sensible au signal électronique du détecteur (31).

5. Echantillonneur d'air selon l'une quelconque des revendications précédentes, pouvant fonctionner de façon à prélever le liquide du récipient de collecte (12) vers la bouteille ou les bouteilles d'échantillon (16), à un débit d'environ 50 µl/min, quand le liquide est introduit dans la chambre d'écoulement d'air (2) à une vitesse d'environ 2 ml/min.

6. Echantillonneur d'air selon l'une quelconque des revendications précédentes, comprenant une pompe à trois canaux unique (13) dans laquelle deux canaux peuvent être actionnés pour pomper le liquide vers et de la chambre d'écoulement d'air (2) et le troisième canal peut être actionné pour prélever la fraction du liquide vers une bouteille d'échantillon choisie (16).

7. Echantillonneur d'air selon l'une quelconque des revendications précédentes, pouvant être actionné pour prélever de 500 à 1000 l/min à travers la sortie d'air (4) .

8. Echantillonneur d'air selon l'une quelconque des revendications précédentes, comprenant en outre un support refroidi par Peltier (15) pour abriter la bouteille ou les bouteilles d'échantillon (16) et maintenir leur contenu entre environ 2°C et environ 8°C.

9. Procédé d'échantillonnage d'air, comprenant l'introduction d'un liquide dans l'air s'écoulant à travers la chambre d'écoulement d'air (2), de façon à entraîner des particules présentes dans le flux d'air, en collectant le liquide et toutes les particules entraînées dans un récipient de collecte (12) et à renvoyer le liquide depuis le récipient de collecte vers la chambre d'écoulement d'air (2), **caractérisé par** l'entraînement d'une fraction du liquide depuis le récipient de collecte (12) vers une ou plusieurs bouteilles d'échantillon (16) et l'introduction de liquide frais dans la chambre d'écoulement d'air (2), quand la présence de bulles d'air dans le liquide revenant du récipient de collecte (12) est détectée par un détecteur (31).
